# EUROPÄISCHE PATENTSCHRIFT

(11) **EP 2 976 171 B1**
(45) Veröffentlichungstag und Bekanntmachung des Hinweises auf die Patenterteilung: **03.05.2017**
(21) Anmeldenummer: 14718004.6
(22) Anmeldetag: 12.03.2014
(51) Int. Cl.: B22C 1/22, C08G 18/54, C08G 18/76, C08G 18/00, C08K 5/10, C08G 18/36

(54) **VERWENDUNG VON MONOESTERN EPOXIDIERTER FETTSÄUREN IN PU-BINDEMITTELN ZUR HERSTELLUNG VON KERNEN UND FORMEN FÜR DEN METALLGUSS**
USE OF MONOESTERS OF EPOXIDIZED FATTY ACIDS IN PU BINDERS FOR THE PRODUCTION OF CORES AND MOULDS FOR METAL CASTING
UTILISATION DE MONOESTERS D'ACIDES GRAS ÉPOXYDÉS DANS DES LIANTS À BASE DE POLYURÉTHANE SERVANT À FABRIQUER DES NOYAUX ET DES MOULES DE FONDERIE

(30) Priorität: 18.03.2013 DE 102013004662
(43) Veröffentlichungstag der Anmeldung: 27.01.2016
(73) Patentinhaber: ASK Chemicals GmbH, 40721 Hilden (DE)
(72) Erfinder: PRIEBE, Christian, 42489 Wülfrath (DE)
(74) Vertreter: Vossius & Partner Patentanwälte Rechtsanwälte mbB
(86) Internationale Anmeldenummer: PCT/EP2014/054812
(87) Internationale Veröffentlichungsnummer: WO 2014/146942

(56) Entgegenhaltungen:
- EP-A1- 0 771 599
- EP-A1- 1 137 500
- DE-A1- 4 327 292
- ALISA ZLATANIC ET AL: "effect of structure on properties of polyols and polyurethanes based on diffrent vegetable oils", JOURNAL OF POLYMER SCIENCE PART B: POLYMER PHYSICS, JOHN WILEY & SONS, INC, US, Bd. 42, 1. Januar 2004 (2004-01-01), Seiten 809-819, XP002560507, ISSN: 0887-6266, DOI: 10.1002/POLB.10737

## Beschreibung

Die vorliegende Erfindung betrifft Bindemittelsysteme auf Polyurethanbasis für die Gießereiindustrie, insbesondere Systeme, die Monoester epoxidierter Fettsäuren enthalten. Weiterhin betrifft die Erfindung Formstoffmischungen, umfassend das Bindemittelsystem, sowie Verfahren zur Herstellung von Gießformteilen und -kernen aus diesen Formstoffmischungen und die Verwendung dieser Formteile und Kerne für den Metallguss.

Gießformteile (oder auch kurz Formen) bilden beim Gießen die äußere Wandung für das Gussstück, Gießkerne (oder auch kurz Kerne) werden zur Ausbildung von Hohlräumen innerhalb des Gussstücks eingesetzt. Dabei ist es nicht zwingend notwendig, dass Formen und Kerne aus denselben Materialien bestehen. So erfolgt z.B. beim Kokillenguss die äußere Formgebung der Gussstücke mit Hilfe metallischer Dauerformen. Auch ist eine Kombination von Formen und Kernen, die aus unterschiedlich zusammengesetzten Formstoffmischungen bestehen und/oder nach unterschiedlichen Verfahren hergestellt wurden, möglich. Wenn nachstehend von Kernen die Sprache ist, gelten die Aussagen in gleichem Maße auch für Formen, die auf der gleichen Formstoffmischung basieren und nach demselben Verfahren hergestellt wurden.

Die Verwendung von Zweikomponenten-Polyurethan-Systemen zur Kernherstellung hat in der Gießereiindustrie große Bedeutung erlangt. Eine Komponente enthält dabei ein Polyol mit im Mittel mindestens zwei OH-Gruppen pro Molekül, die andere ein Polyisocyanat mit mindestens zwei NCO-Gruppen pro Molekül. Die beiden Komponenten werden dabei erst kurz vor oder bei der Herstellung von Formstoffmischungen in Kontakt gebracht. Die Aushärtung des Bindemittelsystems erfolgt in der Regel mit Hilfe von basischen Katalysatoren. Insbesondere flüssige Basen können dem Bindemittelsystem vor der Formgebung zugemischt werden, um die beiden Komponenten zur Reaktion zu bringen (US 3,676,392). Eine weitere Möglichkeit besteht darin, gasförmige tertiäre Amine nach der Formgebung durch das Formstoff-Bindemittelsystem-Gemisch (US 3,409,579) zu leiten. Diese beiden Verfahrensweisen sind als No-Bake-Verfahren und Cold-Box-Verfahren auf dem Fachgebiet bekannt.

In US 3,676,392 und US 3,409,579 werden Phenolharze als Polyole eingesetzt, die durch Kondensation von Phenol mit Aldehyden, vorzugsweise Formaldehyd, in flüssiger Phase bei Temperaturen bis ca. 130°C in Gegenwart katalytischer Mengen von Metallionen erhalten werden. In US 3,485,797 wird die Herstellung solcher Phenolharze detailliert beschrieben. Außer unsubstituiertem Phenol können substituierte Phenole zum Einsatz kommen (vergleiche z.B. US 4,590,229). In EP 0177871 A2 werden alkoxy-modifizierte Phenolharze eingesetzt; durch die Alkoxylierung sollen die Bindemittelsysteme eine erhöhte thermische Stabilität besitzen.

Bei diesen Phenolharz-Polyolen ist die Verwendung von Lösungsmitteln erforderlich, um bei Vermischung mit dem Formgrundstoff eine geeignete niedrige Viskosität und optimale Benetzung des Formgrundstoffs zu erhalten. Obwohl die Viskosität der Polyisocyanate deutlich niedriger ist als die der Phenolharze enthält diese üblicherweise auch Lösungsmittel. Im Allgemeinen sind für Phenolharze polare Lösungsmittel geeignet, während unpolare Lösungsmittel besser für Polyisocyanate geeignet sind. In der Praxis werden häufig Gemische von polaren und unpolaren Lösungsmitteln eingesetzt. Als unpolare Lösungsmittel kommen dabei meist hochsiedende aromatische Kohlenwasserstoffe (oder Gemische davon) mit einem Siedebereich über 150°C bei Normaldruck zum Einsatz, während als polare Lösungsmittel häufig hochsiedende Ester oder Ketone verwendet werden.

Die hochsiedenden Aromaten bringen eine erhebliche Arbeitsplatzbelastung mit sich, so dass nach Wegen gesucht wurde, diese teilweise oder ganz durch weniger schädliche Stoffe zu ersetzen.

In EP 0771599 B2 werden Formulierungen beschrieben, bei denen durch Verwendung von Fettsäuremethylestern ganz oder zumindest weitgehend auf aromatische Lösungsmittel verzichtet werden kann.

In EP 1137500 werden alkoxy-modifizierte Phenolharze eingesetzt, die auf Grund ihrer niedrigen Viskosität weniger Lösungsmittel erfordern, so dass auf diese Weise auch die Menge an aromatischen Kohlenwasserstofflösungsmitteln verringert werden kann. Die Bindemittel auf PU-Basis nehmen eine beherrschende Stellung im Markt ein und wurden seit ihrer Einführung laufend verbessert. Eine Schwäche dieser Bindemittel ist, dass sich bei der Formteil/Kernherstellung auf dem Formwerkzeug Ablagerungen bestehend aus Bindemittel und Körnern des Formgrundstoffs bilden. Im Folgenden werden diese Ablagerungen auch als Harzaufbau bezeichnet. Dieser Harzaufbau kann sich in mehrerlei Hinsicht negativ auswirken: Zum einen nimmt das sogenannte Kleben zu (d.h. die Formteile/Kerne lassen sich von Produktionszyklus zu Produktionszyklus immer schwerer aus dem Formwerkzeug entnehmen), zum anderen wird die Formteil/Kernoberfläche auf Grund der im Harzaufbau verbliebenen Formgrundstoffkörner immer rauer, was sich wiederum nach dem Gießen in einer zunehmenden Rauheit der Gussoberfläche bemerkbar macht. Außerdem verändern sich durch die wachsende Schichtdicke der Ablagerungen die Formteil/Kerndimensionen, was vor allem bei dünnen Formteil/Kernpartien durchaus eine Rolle spielen kann.

Dem Harzaufbau kann man entgegenwirken, indem man einen Teil des Isocyanats mit Fettaminen (US 5,880,174), Rizinusöl (US 6,013,695) bzw. mit Fettalkoholen (US 6,124,375) umsetzt. Dies bedeutet jedoch, dass die Isocyanatkomponente nicht durch einen einfachen Mischvorgang hergestellt werden kann, sondern dass zuerst eine Reaktion unter Kühlung (im Falle von US 5,880,174) bzw. bei erhöhten Temperaturen (im Falle von US 6,013,695 und US 6,124,375) durchgeführt werden muss, was zu einer erheblichen Verteuerung des Produktes führt. Außerdem wird bei der Reaktion ein Teil der Isocyanatgruppen verbraucht, so dass sie für die Umsetzung mit der Polyolkomponente bei der Formteil/Kernherstellung nicht mehr zur Verfügung stehen, was negative Auswirkungen auf die Festigkeit von Formteilen/Kernen haben kann. Diese Gründe sind dafür verantwortlich, dass sich diese Maßnahme in der Praxis nicht durchgesetzt hat.

In der US 4,602,069 wird offenbart, dass man den Bindemitteln Fettalkohole als interne Trennmittel zusetzen kann; weiterhin werden in diesem Patent Fettsäuren und Silikonverbindungen als Trennmittel genannt. Beide Verbindungsklassen sind sehr wirksam, sie besitzen jedoch auch nachteilige Eigenschaften, die einer uneingeschränkten Verwendung entgegenstehen: Da die Aushärtung von Bindemitteln auf PU-Basis basenkatalysiert ist, verlangsamt sich die Reaktionsgeschwindigkeit beim Zusatz von freien Säuren und man benötigt erheblich mehr Katalysator, um diesen Effekt auszugleichen. In der Praxis bevorzugt man aber reaktive Systeme mit kurzen Aushärtezeiten. Ein Mehrverbrauch an Katalysator ist zudem teuer und zwar nicht nur beim Einkauf, sondern auch, zumindest bei der Gashärtung mittels flüchtiger Amine, bei der Entsorgung. Silikonverbindungen wiederum senken bereits bei geringen Zugabemengen von ca. 0,1 - ca. 0,4%, bezogen auf die Bindemittelmenge, das Festigkeitsniveau der Formteile/Kerne so stark, dass es nicht möglich ist, mit den üblichen Bindemittelmengen komplizierte, dünnwandige Formteile/Kerne herzustellen. Gegen eine Erhöhung der Bindemittelmenge sprechen aber mehrere Gründe, nicht zuletzt wirtschaftliche.

Die effektivste Methode zur Bekämpfung von Harzaufbau in der Praxis besteht derzeit darin, die Formwerkzeuge in regelmäßigen Abständen mit einem externen Trennmittel einzusprühen. Solche Trennmittel bestehen beispielsweise aus einer verdünnten Lösung von Silikonen und/oder Wachsen in einem organischen Lösungsmittel. Der Auftrag der Trennmittel kann sehr einfach per Hand mittels Sprühflaschen erfolgen; in vielen Fällen geschieht dies jedoch mit Hilfe von voll in die Abläufe einer Kernschießmaschine integrierten vollautomatischen Sprüheinrichtungen, bei denen sich die Menge an Trennmittel und die Häufigkeit des Auftrags einstellen und variieren lassen.

In beiden Fällen lässt sich das Entstehen von Sprühnebeln, die aus Umwelt- und Sicherheitsgründen abgesaugt werden müssen, nicht vermeiden. Aus diesem Grund sind seit einigen Jahren Trennmittel in Form von wässrigen Emulsionen auf dem Markt, mit welchen die Umweltbelastung durch flüchtige organische Verbindungen (Volatile Organic Compounds) verringert werden konnte.

Trotz des Einsatzes von externen Trennmitteln lässt sich die Verschmutzung der Formwerkzeuge durch Harzaufbau nicht völlig verhindern, so dass die Werkzeuge in regelmäßigen Abständen einer aufwändigen Reinigung unterzogen werden müssen.

Eine Verlängerung der Reinigungsintervalle würde dazu beitragen, die Formteil/Kernherstellung effektiver und damit wirtschaftlicher zu machen.

Der Erfindung lag daher die Aufgabe zugrunde, den Gießereien Bindemittelsysteme auf PU-Basis zur Verfügung zu stellen, die bei der Formteil/Kernherstellung nur zu geringem bis sehr geringem Harzaufbau führen (und damit die Reinigungsintervalle verlängern) ohne dabei den Arbeitsplatz übermäßig mit Sprühnebeln zu belasten und die Festigkeit der Formteile/Kerne negativ zu beeinflussen.

Überraschenderweise wurde gefunden, dass dies mit Bindemittelsystemen möglich ist, welche
(A) eine Polyolkomponente, umfassend ein freie OH-Gruppen enthaltendes Phenolharz,
(B) eine Isocyanatkomponente, umfassend ein Polyisocyanat mit mindestens zwei NCO-Gruppen pro Molekül,
(C) mindestens einen Monoester einer epoxidierten Fettsäure und
gegebenenfalls (D) ein oder mehr weitere Bestandteile ausgewählt aus organischen Lösungsmitteln, Silanen, Ölen, Komplexbildnern, Weichmachern, Additiven zur Verlängerung der Sandlebenszeit und internen Trennmitteln umfassen.

Es wurde gefunden, dass bei Verwendung des erfindungsgemäßen Bindemittelsystems auf die Verwendung von externen Trennmitteln entweder ganz verzichtet werden kann oder zumindest die Sprühintervalle deutlich verlängert werden können und es trotzdem zu keinem oder nur sehr geringem Harzaufbau im Formwerkzeug kommt.

Bei den Monoestern epoxidierter Fettsäuren (C) handelt es sich um Veresterungsprodukte von ein- oder mehrfach ungesättigten, geradkettigen und/oder verzweigten, einbasigen Fettsäuren R'COOH oder Fettsäuregemischen oder Fettsäurehalogeniden oder entsprechenden Mischungen, deren Doppelbindung(en) nach der Veresterung ganz oder teilweise epoxidiert wurden, wobei die Veresterung mit einem monofunktionellen, geradkettigen oder verzweigten, gesättigten oder ungesättigten oder aromatischen Alkohol R"OH durchgeführt wurde. Die Monoester epoxidierter Fettsäuren weisen folglich die Formel 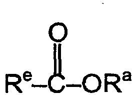 auf,
wobei R^{a} der von dem einwertigen Alkohol R"OH abgeleitete Rest ist und R^{e} der von der Fettsäure R'COOH abgeleitete epoxidierte Rest ist.
   R' ist vorzugsweise geradkettiges oder verzweigtes C₂-C₂₄ Alkenyl, bevorzugter C₈-C₂₄ Alkenyl, weiter bevorzugt C₁₂-C₂₄ Alkenyl und besonders bevorzugt C₁₈-C₂₄ Alkenyl; innerhalb der Definition von R' enthält ein Alkenylrest mindestens eine C-C Doppelbindung (vorzugsweise 1-6, noch bevorzugter 1-3 C-C Doppelbindungen).
   R" ist vorzugsweise geradkettiges oder verzweigtes C₁₋₁₂ Alkyl, geradkettiges oder verzweigtes C₂₋₁₂ Alkenyl (innerhalb der Definition von R" enthält ein Alkenylrest mindestens eine C-C Doppelbindung, vorzugsweise 1-4 und noch bevorzugter 1-3 C-C Doppelbindungen), C₆₋₁₀ Aryl, oder C₇₋₁₅ Aralkyl; bevorzugter geradkettiges oder verzweigtes C₁₋₁₀ Alkyl oder geradkettiges oder verzweigtes C₂₋₁₀ Alkenyl, weiter bevorzugt geradkettiges oder verzweigtes C₁₋₈ Alkyl oder geradkettiges oder verzweigtes C₂₋₈ Alkenyl, besonders bevorzugt geradkettiges oder verzweigtes C₁₋₈ Alkyl.
R^{e} leitet sich von R' ab, wobei jedoch mindestens eine der C-C Doppelbindungen epoxidiert ist.

R^{a} leitet sich von R" ab und ist vorzugsweise wie R" vorstehend definiert. Wenn R" ein C₂₋₁₂ Alkenyl war, kann bei der Epoxidierung des Fettsäureesters die C-C Doppelbindung des Alkoholrestes gegebenenfalls ebenfalls epoxidiert werden.

Als Fettsäuren R'COOH kommen z.B. Palmitoleinsäure, Ölsäure, Erucasäure, Linolsäure, Linolensäure, Elaeostearinsäure, Arachidonsäure, Chupanodonsäure und Docosahexaensäure in Betracht.

Beispiele geeigneter Alkohole R"OH sind Methanol, Ethanol, n-Butanol, Isopropanol, iso-Butanol, 1-Amylalkohol, 2-Amylalkohol, 3-Amylalkohol, 2-Ethylhexanol, Vinylalkohol und Allylalkohol; besonders bevorzugte Beispiele sind Methanol, Ethanol, Isopropanol, n-Butanol und 2-Ethylhexanol.

Als Ausgangsprodukte im Hinblick auf den Fettsäurerest in den Monoestern epoxidierter Fettsäuren kommen pflanzliche Öle wie z.B. Rapsöl, Sojaöl, Sonnenblumenöl, Leinöl, Ölbaumöl, Ölpalmöl, Hanföl und Tallöl in Frage sowie einzelne Fettsäuren, die mindestens eine Doppelbindung enthalten.

Es ist nicht notwendig, dass es sich bei der Fettsäure und /oder dem Alkohol, die für die Veresterung verwendet werden um einheitliche Produkte handelt; es können auch Gemische verwendet werden und insbesondere dürfen auch Anteile gesättigter Fettsäuren im Gemisch mit ungesättigter Fettsäure vorhanden sein. So liegen z.B. die Fettsäuren bei natürlich vorkommenden Triglyceriden (pflanzliche Öle) als Gemische vor, welche einer Umesterung mit R"OH und ohne Auftrennung der gesättigten Fettsäurenmonoester einer anschließenden Epoxidierung unterworfen werden können. Bevorzugt beträgt der ungesättigte Anteil der Fettsäuren mehr als 50 Gew.% aller für die Veresterung eingesetzten Fettsäuren. Dies gilt dann in gleicher Weise für die daraus hergestellten Monoester bzw. die Monoester epoxidierter Fettsäuren, z.B. den epoxidierten Sojaölmethylester.

Die erfindungsgemäß verwendeten Monoester von epoxiderten Fettsäuren (bzw. Fettsäuregemischen) sind entweder im Handel erhältlich oder können nach bekannten Verfahren hergestellt werden. Liegt die Fettsäure als freie Säure vor, kann nach bekannten Verfahren verestert und anschließend epoxidiert werden. Liegt die Fettsäure als Triglycerid vor, wird eine Umesterung mit dem einwertigen Alkohol R"OH nach üblichen Verfahren durchgeführt und anschließend epoxidiert.

Die Doppelbindungen eines Esters einer ein- oder mehrfach ungesättigten Fettsäure oder eines Estergemisches von zwei oder mehr Fettsäuren, von denen mindestens eine ein- oder mehrfach ungesättigt ist, werden nach der Veresterung/Umesterung epoxidiert; für die Epoxidierung stehen z.B. die Prileshajev-Epoxidierung mit Peroxyameisensäure oder eine chemo-enzymatische Epoxidierung zur Verfügung.

Wenn es sich bei der eingesetzten Fettsäure um eine mehrfach ungesättigte handelt, beträgt der Epoxidierungsgrad im Monoester mindestens 1 pro Fettsäureestermolekül. Bei Einsatz eines Fettsäuregemisches beträgt der Epoxidierungsgrad aller darin enthaltenen ungesättigten Fettsäuren mindestens 1.

Bezüglich der Veresterung ist eine vollständige Veresterung bzw. Umesterung bevorzugt.

Der epoxidierte Monoester (C) bzw. das Gemisch von epoxidierten Monoestern (falls z.B. von einem pflanzlichen Öl ausgegangen wurde; wurde von einem pflanzlichen Öl ausgegangen sind auch nicht epoxidierte Monoester von gesättigten Fettsäuren im Gemisch mit den erfindungsgemäßen epoxidierten Monoestern vorhanden) hat vorzugsweise eine Jodzahl von ≤15, insbesondere bevorzugt von <7.

Der Anteil des Monoesters epoxidierter Fettsäuren (C) bzw. das Gemisch von solchen Monoestern, im Bindemittelsystem (in Bezug auf das gesamte Bindemittelsystem aus (A)+(B)+(C) und etwaiger weiterer Zusatzstoffe) beträgt vorzugsweise 0,5 bis 30 Gew.%, bevorzugter 0,5 bis 25 Gew.% und besonders bevorzugt 0,5 bis 20 Gew.%.

Die Polyolkomponente umfasst Phenol-Aldehyd-Harze, hier vorliegend verkürzt auch Phenolharze genannt. Zur Herstellung der Phenolharze sind alle herkömmlich verwendeten Phenol-Verbindungen geeignet. Neben unsubstituierten Phenolen können substituierte Phenole oder Gemische hiervon eingesetzt werden. Die Phenol-Verbindungen sind vorzugsweise entweder in beiden ortho-Positionen oder in einer ortho- und in der para-Position nicht substituiert. Die verbleibenden Ring-Kohlenstoffatome können substituiert sein. Die Wahl des Substituenten ist nicht besonders beschränkt, sofern der Substituent die Reaktion des Phenols mit dem Aldehyd nicht nachteilig beeinflusst. Beispiele substituierter Phenole sind alkylsubstituierte, alkoxysubstituierte, arylsubstituierte und aryloxysubstituierte Phenole.

Die vorstehend genannten optionalen Substituenten des Phenols weisen vorzugsweise 1 bis 26, bevorzugter 1 bis 15 Kohlenstoffatome, und gegebenenfalls ein oder mehrere Ethersauerstoffe auf. Beispiele geeigneter substituierter Phenole sind o-Kresol, m-Kresol, p-Kresol, 3,5-Xylenol, 3,4-Xylenol, 3,4,5-Trimethylphenol, 3-Ethylphenol, 3,5-Diethylphenol, p-Butylphenol, 3,5-Dibutylphenol, p-Amylphenol, Cyclohexylphenol, p-Octylphenol, p-Nonylphenol, Cardanol, 3,5-Dicyclohexylphenol, p-Crotylphenol, p-Phenylphenol, 3,5-Dimethoxyphenol und p-Phenoxyphenol; von diesen sind o-Kresol und Cardanol bevorzugt.

Besonders bevorzugt ist Phenol selbst, sowie kondensierte, unsubstituierte Phenole, wie Bisphenol A, und Phenole, die mehr als eine phenolische Hydroxylgruppe aufweisen.

In einer Ausführungsform werden Phenole der allgemeinen Formel : 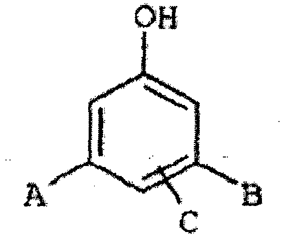 zur Herstellung des Phenolharzes verwendet, wobei A, B und C unabhängig voneinander ausgewählt sind aus: Einem Wasserstoffatom, einem verzweigten oder unverzweigten Alkylrest, der vorzugsweise 1 bis 26, bevorzugter 1 bis 15 Kohlenstoffatome, aufweisen kann, einem verzweigten oder unverzweigten Alkoxyrest, der vorzugsweise 1 bis 26, bevorzugter 1 bis 15 Kohlenstoffatome aufweisen kann, einem verzweigten oder unverzweigten Alkenoxyrest, der beispielsweise 1 bis 26, vorzugsweise 1 bis 15 Kohlenstoffatome aufweisen kann, einem Aryl- oder Alkylarylrest, wie beispielsweise Biphenyle.

Als Aldehyd zur Herstellung der Phenolharze eignen sich z.B. Aldehyde der Formel:

R-CHO

wobei R ein Wasserstoffatom oder ein geradkettiger oder verzweigter, gesättigter oder aromatischer Kohlenwasserstoffrest mit vorzugsweise 1 bis 8 Kohlenstoffatomen ist. Spezielle Beispiele sind Formaldehyd, Acetaldehyd, Propionaldehyd, Furfurylaldehyd und Benzaldehyd. Noch bevorzugter weist R 1 bis 3 Kohlenstoffatome auf und besonders bevorzugt wird Formaldehyd eingesetzt, entweder in seiner wässrigen Form, als Paraformaldehyd, oder Trioxan.

Um die Phenolharze zu erhalten, wird vorzugsweise eine mindestens äquivalente Molzahl an Aldehyd, bezogen auf die Molzahl der Phenolkomponente, eingesetzt. Bevorzugt beträgt das Molverhältnis Aldehyd zu Phenol 1,0 : 1 bis 2,5 : 1, besonders bevorzugt 1,1 : 1 bis 2,2 : 1, insbesondere bevorzugt 1,2 : 1 bis 2,0 : 1.

Die Herstellung des Phenolharzes erfolgt nach dem Fachmann bekannten Verfahren. Dabei werden das Phenol und der Aldehyd unter im Wesentlichen wasserfreien Bedingungen, insbesondere in Gegenwart eines zweiwertigen Metallions, bei Temperaturen von vorzugsweise weniger als 130°C umgesetzt. Das entstehende Wasser wird abdestilliert. Dazu kann der Reaktionsmischung ein geeignetes Schleppmittel zugesetzt werden, beispielsweise Toluol oder Xylol, oder die Destillation wird bei reduziertem Druck durchgeführt.

Das Phenolharz wird so gewählt, dass eine Vernetzung mit dem Polyisocyanat möglich ist. Es versteht sich von selbst, dass für den Aufbau eines Netzwerkes Phenolharze, die Moleküle mit mindestens zwei Hydroxylgruppen im Molekül umfassen, notwendig sind.

Besonders geeignete Phenolharze sind unter der Bezeichnung "ortho-ortho'" oder "high-ortho"-Novolake bzw. Benzyletherharze bekannt. Diese sind durch Kondensation von Phenolen mit Aldehyden in schwach saurem Medium unter Verwendung geeigneter Katalysatoren erhältlich. Zur Herstellung von Benzyletherharzen geeignete Katalysatoren sind Salze zweiwertiger Ionen von Metallen, wie Mn, Zn, Cd, Mg, Co, Ni, Fe, Pb, Ca und Ba. Bevorzugt wird Zinkacetat verwendet. Die eingesetzte Menge ist nicht kritisch. Typische Mengen an Metallkatalysator betragen 0,02 bis 0,3 Gew.%, bevorzugt 0,02 bis 0,15 Gew.%, bezogen auf die Gesamtmenge an Phenol und Aldehyd.

Solche Harze sind z.B. in US 3,485,797 und in EP 1137500 beschrieben, auf deren Offenbarung hiermit sowohl hinsichtlich der Harze selbst, als auch hinsichtlich ihrer Herstellung ausdrücklich Bezug genommen wird.

Die Methylolgruppen des Phenolharzes können teilweise mit einem C₁₋₈ Alkanol (vorzugsweise Methanol, Ethanol oder n-Butanol) verethert sein. Solche veretherten Phenolharze sind im Handel erhältlich oder können nach bekannten Verfahren hergestellt werden (siehe z.B. EP 1137500 und EP 0177871).

Das Molekulargewicht der verwendeten Phenolharze ist nicht besonders beschränkt; es können alle auf dem Fachgebiet üblicherweise verwendeten Phenolharze eingesetzt werden. Vorzugsweise beträgt das Molekulargewicht bis 2000 g/mol (Gewichtsmittel bestimmt mit GPC unter Verwendung von Polystyrolstandards).

Neben den vorstehend genannten Phenolharzen kann die Polyolkomponente des Bindemittelsystems beim No-Bake Verfahren auch noch andere Polyolverbindungen enthalten wie nieder- bis mittelviskose, lineare oder verzweigte Polyetherpolyole und/oder Polyesterpolyole mit primären und/-oder sekundären Hydroxylgruppen. Polyetherpolyole werden nach bekannten Verfahren durch Reaktion von mehrwertigen Stabmolekülen, wie Ethylen-, Propylenglykol, Glycerin, 1,4-Butandiol, Trimethylolpropan, Pentaerythrit, Sorbit, Hexantriol usw. oder deren Gemische mit Ethylenoxid und/oder Propylenoxid erhalten. Polyesterpolyole entstehen nach bekannten Verfahren bei der Reaktion von Polyalkoholen oder deren Gemische mit organischen gesättigten und/oder ungesättigten Polycarbonsäuren oder deren Gemische vom Typ Adipinsäure, Sebazinsäure, Phthalsäure, Tetrahydrophthalsäure, Hexahydrophthalsäure, Maleinsäure und Fumarsäure.

Die Isocyanat-Komponente des Bindemittelsystems umfasst ein aliphatisches, cycloaliphatisches oder aromatisches Polyisocyanat, bevorzugt mit 2 bis 5 Isocyanatgruppen pro Molekül. Je nach den gewünschten Eigenschaften können auch Gemische von Isocyanaten eingesetzt werden.

Geeignete Polyisocyanate umfassen aliphatische Polyisocyanate, wie z.B. Hexamethylendiisocyanat, alicyclische Polyisocyanate wie z.B. 4,4'-Dicyclohexyl-methandiisocyanat und dimethyl-substituierte Derivate hiervon. Beispiele geeigneter aromatischer Polyisocyanate sind Toluol-2,4-diisocyanat, Toluol-2,6-diisocyanat, 1,5-Naphthalendiisocyanat, Triphenylmethantriisocyanat, Xylylendiisocyanat und methylsubstituierte Derivate der vorstehenden, sowie Polymethylenpolyphenylisocyanate. Insbesondere bevorzugte Polyisocyanate sind aromatische Polyisocyanate, besonders bevorzugt sind Polymethylenpolyphenylpolyisocyanate wie z.B. technisches 4,4'-Diphenylmethandiisocyanat, d.h. 4,4'-Diphenylmethandiisocyanat mit einem Anteil an Isomeren und höheren Homologen.

Im allgemeinen wird 10-500 Gew.% Polyisocyanat bezogen auf das Gewicht des Phenolharzes eingesetzt; vorzugsweise werden 20-300 Gew.% Polyisocyanat bezogen auf das Gewicht des Phenolharzes eingesetzt.

Bevorzugt wird das Polyisocyanat in einer Menge eingesetzt, dass die Anzahl der Isocyanatgruppen von 80 bis 120 %, bezogen auf die Anzahl der freien Hydroxylgruppen des Harzes, beträgt.

Die Polyolkomponente und/oder die Isocyanatkomponente des Bindemittelsystems wird bevorzugt als Lösung in einem organischen Lösungsmittel oder einer Kombination von organischen Lösungsmitteln eingesetzt. Lösungsmittel können z.B. deshalb erforderlich sein, um die Komponenten des Bindemittelsystems in einem ausreichend niedrigviskosen Zustand zu halten, um eine gleichmäßige Benetzung des feuerfesten Formgrundstoffes zu erreichen und dessen Rieselfähigkeit zu erhalten und bei der Aushärtung eine gute Vernetzung der Bindermoleküle zu erreichen.

Als Lösungsmittel für das Phenolharz können neben den z.B. unter der Bezeichnung Solvent Naphtha bekannten aromatischen Lösungsmitteln weiterhin sauerstoffreiche polare, organische Lösemittel verwendet werden. Geeignet sind vor allem Fettsäureester (im Unterschied zu Bestandteil (C) sind hier keine Epoxygruppen vorhanden), Dicarbonsäureester, Glykoletherester, Glykoldiester, Glykoldiether, cyclische Ketone, cyclische Ester (Lactone), cyclische Carbonate oder Kieselsäureester oder deren Mischungen. Bevorzugt werden Fettsäureester, Dicarbonsäureester, cyclische Ketone und cyclische Carbonate verwendet.

Bei den als Lösungsmittel verwendeten Fettsäureestern handelt es sich um Veresterungsprodukte von gesättigten und/oder ungesättigten, geradkettigen und/oder verzweigten Fettsäuren mit mono-, di- und/oder höherfunktionellen Alkoholen. Die Kettenlänge der zu veresternden Fettsäure liegt vorzugsweise bei C₈-C₂₄, bevorzugter C₁₂-C₂₄ und besonders bevorzugt C₁₈-C₂₄ Die Kettenlänge des zur Veresterung eingesetzten Alkohols beträgt vorzugsweise C₁-C₁₂, bevorzugter C₁-C₁₀ und besonders bevorzugt C₁-C₈. Hinsichtlich der Funktionalität der Alkoholkomponenten wird 1 bevorzugt. Beispiele solcher Alkohole sind Methanol, Ethanol, n- oder iso-Butanol und 2-Ethylhexanol. Es ist nicht notwendig, dass es sich bei der Fettsäure und /oder dem Alkohol um einheitliche Produkte handelt; sondern die Verwendung von Gemischen ist möglich. So liegen z.B. die Fettsäuren bei natürlich vorkommenden Triglyceriden als Gemische vor. Dies gilt dann in gleicher Weise für die daraus hergestellten Monoester, z.B. Rapsölmethylester oder Tallölbutylester.

Typische Dicarbonsäureester, die als Lösungsmittel geeignet sind, weisen die Formel R¹OOC-R²-COOR¹ auf, wobei R¹ jeweils unabhängig voneinander eine Alkylgruppe mit 1 bis 12, bevorzugt 1 bis 6, Kohlenstoffatomen darstellt und R² eine Alkylengruppe mit 1 bis 4 Kohlenstoffatomen ist. Beispiele sind Dimethylester von Carbonsäuren mit 4 bis 6 Kohlenstoffatomen, die z.B. unter der Bezeichnung Dibasic Ester von DuPont erhältlich sind.

Typische Glykoletherester-Lösungsmittel sind Verbindungen der Formel R³-O-R⁴-OOCR⁵, wobei R³ eine Alkylgruppe mit 1 bis 4 Kohlenstoffatomen darstellt, R⁴ eine Alkylengruppe mit 2 bis 4 Kohlenstoffatomen ist und R⁵ eine Alkylgruppe mit 1bis 3 Kohlenstoffatomen ist, z.B. Butylglykolacetat; besonders bevorzugt sind Glykoletheracetate.

Typische Glykoldiester-Lösungsmittel weisen die allgemeine Formel R³COO-R⁴-OOCR⁵ auf, wobei R³ bis R⁵ wie oben definiert sind und die Reste jeweils unabhängig voneinander ausgewählt werden (z.B. Propylenglykoldiacetat). Bevorzugt sind Glykoldiacetate. Glykoldiether lassen sich durch die Formel R³-O-R⁴-O-R₅ charakterisieren, in der R³ bis R⁵ wie oben definiert sind und die Reste jeweils unabhängig voneinander ausgewählt werden (z.B. Dipropylenglykoldimethylether).

Typische cyclische Ketone, cyclische Ester und cyclische Carbonate mit 4 bis 5 Kohlenstoffatomen sind ebenfalls geeignet (z.B. Propylencarbonat). Die Alkyl- und Alkylengruppen können jeweils verzweigt oder unverzweigt sein.

Die Polyolkomponente (A) enthält vorzugsweise 5-60 Gew.% ein oder mehrere der vorstehenden Lösungsmittel, bevorzugter 10-55 Gew.% und insbesondere bevorzugt 10-50 Gew.%, wobei vorzugsweise aromatische Lösungsmittel, wie z.B. Solvent Naphtha, verwendet werden.

Flüssige Polyisocyanate können auch in unverdünnter Form eingesetzt werden, während feste oder viskose Polyisocyanate in organischen Lösungsmitteln gelöst werden. Bis zu 80 Gew.% der Isocyanat-Komponente können aus organischem Lösungsmittel bestehen. Als Lösungsmittel für das Polyisocyanat können die vorstehend genannten Fettsäureester, aromatische Lösungsmittel oder ein Gemisch aus Fettsäureester und bis zu 50 Gew.% aromatische Lösungsmittel verwendet. Geeignete aromatische Lösungsmittel sind z.B. alkyl-substituierte Naphthaline, alkylsubstituierte Benzole und Gemische hiervon. Besonders bevorzugt sind Gemische aus aromatischen Lösungsmitteln, die einen Siedepunktbereich zwischen 140°C und 320°C besitzen (z.B. Solvent Naphtha, das eine Fraktion aromatischer Kohlenwasserstoffe mit Siedebereich von etwa 150 bis 230°C ist).

Neben den bereits erwähnten Bestandteilen können die Bindemittelsysteme weitere Zusätze enthalten, z. B. Silane (z.B. gemäß US 3,905,934), Öle (z.B. gemäß US 4,268,425 oder EP 1074568), Komplexbildner (z.B. gemäß US 5,447,968), Weichmacher (z.B. Dialkylphthalate gemäß US 3,905,934), Additive zur Verlängerung der Verarbeitungszeit - auch als Sandlebenszeit bezeichnet - (z.B. gemäß US 4,436,881, US 4,540,724, US 4,602,069, US 4,683,252, US 4,852,629) und interne Trennmittel (z.B. gemäß US 4,602,069).

Beispielsweise können den Bindemitteln Silane der allgemeinen Formel (R^{S}O)₃SiR^{T} zugesetzt werden. Dabei ist R^{S} ein Kohlenwasserstoffradikal, bevorzugt ein Alkylradikal mit 1-6 Kohlenstoffatomen, und R^{T} ein Alkylradikal, ein alkoxysubstituiertes Alkylradikal oder ein Alkylamin-substituiertes Aminradikal mit Alkylgruppen, die 1-6 Kohlenstoffatome besitzen.
Geeignete Silane sind beispielsweise Aminosilane, Epoxysilane, Mercaptosilane, Hydroxysilane und Ureidosilane, wie γ-Hydroxypropyltrimethoxysilan, γ-Aminopropyltrimethoxysilan, 3-Ureidopropyltriethoxysilan, γ-Mercaptopropyltrimethoxysilan, γ-Glycidoxypropyltrimethoxysilan, ß-(3,4-Epoxycyclohexyl)trimethoxysilan und N-ß-(Aminoethyl)-γ-aminopropyltrimethoxysilan.

Beispiele von kommerziell erhältlichen Silanen sind Silquest Z6040 und Silquest A-187 (γ-Glycidoxypropyltrimethoxysilan), Silquest A-1100 (γ-Aminopropyltriethoxysilan) und Silquest A-1120 (N-β-(Aminopethyl)-γ-aminopropyltrimethoxysilan) (Hersteller Momentive Performance Materials Inc.) und Dynasilan 2201 EQ (Ureidosilan) der Fa. Evonik GmbH.

Die Menge des Silans beträgt vorzugsweise 0 bis 2 Gew.% bezogen auf das Bindemittelsystem.

Die Bindemittelsysteme werden bevorzugt als Zwei-Komponenten-Systeme angeboten, wobei das Polyol (gegebenenfalls mit Lösungsmittel und/oder optionalen Zusätzen) eine Komponente darstellt und das Polyisocyanat, gegebenenfalls in Lösung (gegebenenfalls mit optionalen Zusätzen), die andere Komponente ist. Der Bestandteil C kann in der ersten oder zweiten Komponente oder in beiden vorhanden sein, ist aber vorzugsweise Bestandteil der Isocyanat-Komponente.

Weiterhin betrifft die Erfindung Formstoffmischungen, die feuerfeste Formgrundstoffe (auch Aggregate genannt) und erfindungsgemäßes Bindemittelsystem, vorzugsweise 0,2 bis 5 Gew.%, bevorzugter 0,3 bis 4 Gew.%, besonders bevorzugt 0,4 bis 3 Gew.%, Bindemittelsystem bezogen auf das Gewicht der feuerfesten Formgrundstoffe, umfassen.

Als feuerfeste Formgrundstoffe können dabei beispielsweise Quarz-, Zirkon- oder Chromerzsand, Olivin, Schamotte (Al₂O₃-Anteil 10-45 Gew.%) und Bauxit verwendet werden. Weiterhin können auch synthetisch hergestellte Formgrundstoffe eingesetzt werden, wie z.B. Aluminiumsilikathohlkugeln (sog. Microspheres), Glasperlen, Glasgranulat oder kugelförmige keramische Formgrundstoffe, die z.B. unter der Bezeichnung "Cerabeads" bzw. "Carboaccucast" bekannt sind. Mischungen der vorstehend genannten feuerfesten Formgrundstoffe können ebenfalls eingesetzt werden. Es ist bevorzugt, dass feuerfeste Formgrundstoffe Quarzsand enthalten, und besonders bevorzugt mindestens 20 Gew.% (noch bevorzugter mindestens 50 Gew.%), bezogen auf die Gesamtmenge der Formgrundstoffe. Die Korngröße/Durchmesser der Formgrundstoffe, die in der vorliegenden Erfindung verwendet werden können, ist nicht besonders beschränkt; es können alle auf dem Fachgebiet üblichen Formgrundstoffe verwendet werden.
Die mittlere Korngröße der Formgrundstoffe liegt üblicherweise im Bereich von ca. 0,1 mm - 0,55 mm, bevorzugt 0,2 mm - 0,45 mm und besonders bevorzugt 0,25 - 0,4 mm.

Für die Herstellung einer Formstoffmischung werden die Bestandteile des Bindemittelsystems mit dem Formgrundstoff wie z.B. Quarzsand vermischt.

Es ist möglich, die beiden Komponenten eines wie vorstehend definierten 2-Komponentensystems zunächst jeweils mit Teilen des Aggregates zu mischen und anschließend diese beiden Mischungen zu vereinigen. Es ist auch möglich, die Komponenten des Bindemittels gleichzeitig oder nacheinander (in beliebiger Reihenfolge) zu dem feuerfesten Formgrundstoff zu geben. Verfahren um eine gleichmäßige Mischung der Bindemittelkomponenten und des Aggregates zu erzielen sind dem Fachmann bekannt. Die Mischung kann zusätzlich gegebenenfalls andere konventionelle Bestandteile, wie Eisenoxid, gemahlene Flachsfasern, Holzteile, Pech und refraktäre Metalle, enthalten.

Die Erfindung betrifft außerdem ein Verfahren zur Herstellung eines Gießformteils oder eines Gießkerns, umfassend
(a) Vermischen von feuerfesten Formgrundstoffen mit dem erfindungsgemäßen Bindemittelsystem (vorzugsweise 0,2 bis 5 Gew.%, bevorzugter 0,3 bis 4 Gew.%, besonders bevorzugt 0,4 bis 3 Gew.%, Bindemittelsystem bezogen auf die Menge der eingesetzten Formgrundstoffe), zum Erhalt einer Formstoffmischung (auch als Formstoffgemisch bezeichnet);
(b) Einbringen des in Schritt (a) erhaltenen Formstoffgemisches in ein Formwerkzeug;
(c) Härten des Formstoffgemischs im Formwerkzeug;
(d) anschließendes Trennen des gehärteten Gießgemischs vom Werkzeug.

Zur Herstellung des Formkörpers wird zunächst wie oben beschrieben das Bindemittel mit dem feuerfesten Formgrundstoff zu einer Formstoffmischung vermischt. Soll die Herstellung des Formkörpers nach dem PU-No-Bake-Verfahren erfolgen, wird der Formstoffmischung auch bereits ein geeigneter Katalysator zugegeben werden. Bevorzugt werden dazu flüssige Amine zur Formstoffmischung gegeben. Diese Amine weisen bevorzugt einen pK_{b}-Wert von 4 bis 11 auf. Beispiele geeigneter Katalysatoren sind 4-Alkylpyridine, wobei die Alkylgruppe 1 bis 4 Kohlenstoffatome umfasst, Isochinolin, Arylpyridine, wie Phenylpyridin, 2-Methoxypyridin, Pyridazin, Chinolin, n-Methylimidazol, 4,4'-Dipyridin, Phenylpropylpyridin, 1-Methylbenzimidazol, 1,4-Thiazin, N,N-Dimethylbenzylamin, Tribenzylamin, N,N-Dimethyl-1,3-Propandiamin, N,N-Dimethylethanolamin sowie Triethanolamin. Der Katalysator kann gegebenenfalls mit einem inerten Lösemittel verdünnt werden, beispielsweise 2,2,4-Trimethyl-1,3-pentandiol-diisobutyrat, oder einem Fettsäureester. Die Menge des zugegebenen Katalysators beträgt, bezogen auf das Gewicht der Polyolkomponente (Phenolharz plus Lösungsmittel und sonstige Bestandteile - falls vorhanden), vorzugsweise 0,1 bis 15 Gew.%.

Die Formstoffmischung wird dann mit üblichen Mitteln in eine Form eingebracht und dort verdichtet. Die Formstoffmischung wird anschließend zu einem Formkörper ausgehärtet.

Gemäß einer weiteren bevorzugten Ausführungsform erfolgt die Aushärtung nach dem PU-Cold-Box-Verfahren. Dazu wird ein gasförmiger Katalysator durch die bereits geformte Formstoffmischung geleitet. Als Katalysator können die üblichen Katalysatoren auf dem Gebiet des Cold-Box-Verfahrens verwendet werden, beispielsweise tertiäre Amine, insbesondere bevorzugt Dimethylethylamin, Dimethyln-propylamin, Dimethylisopropylamin, Dimethyl-n-butylamin, Triethylamin und Trimethylamin in ihrer gasförmigen Form oder als Aerosol.

Weiter betrifft die Erfindung einen Formkörper (Gießformteil oder Gießkern), wie er mit dem oben beschriebenen Verfahren erhalten werden kann.

Weiter betrifft die Erfindung die Verwendung dieses Formkörpers für den Metallguss, insbesondere Eisen- sowie Aluminiumguss.

Die Erfindung wird im Weiteren anhand von Versuchsbeispielen näher erläutert ohne jedoch darauf beschränkt zu sein.

### Beispiele

Zur Beurteilung des Harzaufbaus in einem metallischen Formwerkzeug wurde wie folgt vorgegangen:
Zu 100 Gewichtsteilen Quarzsand H 32 (Quarzwerke Frechen GmbH) wurden nacheinander jeweils 0,8 Gewichtsteile Avecure 330 (butyliertes Phenol-Formaldehyd-Harz in aromatischen Lösungsmitteln; Gehalt an Harz 70 Gew.%; frei von Fettsäureestern und epoxidierten Verbindungen) als Polyolkomponente (erhältlich von ASK Chemicals GmbH) und 0,8 Gewichtsteile der in der Tabelle 1 aufgeführten Isocyanatkomponenten gegeben und in einem Labormischer (Vogel & Schemmann AG) zwei Minuten lang intensiv vermischt. Anschließend wurden die Formstoffmischungen in den Vorratsbehälter einer Kernschießmaschine (Röperwerke Gießereimaschinen GmbH) überführt und mittels Druckluft (1,5 bar) in ein senkrecht zur Einschussrichtung montiertes Formwerkzeug für einen sogenannten Georg-Fischer-Prüfriegel (22,36 mm x 22,36 mm x 220 mm) eingebracht; das Formwerkzeug war auf der der Einschussöffnung gegenüberliegenden Fläche mit einem polierten entfetteten Edelstahlblech versehen. Die Formstoffmischung wurde danach durch Begasen mit einem Triethylamin-Luft-Gemisch (0,5 ml Amin, 1 bar, Begasungszeit 10 Sekunden) ausgehärtet und der fertige Georg-Fischer-Prüfriegel dem Werkzeug entnommen. Dieser Vorgang wurde für jede Formstoffmischung 20 Mal wiederholt. Anschließend wurde gravimetrisch bestimmt, wieviel der gehärteten Formstoffmischungen auf dem Edelstahlblech haften geblieben war. Die Ergebnisse sind in Tabelle 2 zusammengefasst.

**Tab. 1 Zusammensetzung der Isocyanatkomponenten (in Gew.% bezogen auf Isocyanatkomponente)**

| | nicht | | | | | | | | | |
|---|---|---|---|---|---|---|---|---|---|---|
| | erfindungsgemäß | | | erfindungsgemäß | | | | | | |
| Versuch | A | B⁽¹⁾ | C | D | E | F | G | H | I | J |
| polym. MDI⁽²⁾ | 80 | 80 | 80 | 80 | 80 | 80 | 80 | 80 | 80 | 80 |
| Solv. Naphtha Leicht⁽³⁾ | 20 | | | | 10 | 10 | 15 | 15 | 18 | |
| epox. Sojaölmethylester⁽⁴⁾ | | | | 20 | 10 | | 5 | | 2 | 5 |
| epox. 2-Ethylhexyloleat⁽⁵⁾ | | | | | | 10 | | 5 | | |
| Rapsölmethylester⁽⁶⁾ | | 20 | | | | | | | | 15 |
| Tallölbutylester⁽⁷⁾ | | | 20 | | | | | | | |

| | | | | | | | | | | |
|---|---|---|---|---|---|---|---|---|---|---|
| (1) angelehnt an EP 0 771 599 (2) MDI = Diphenylmethandiisocyanat erhältlich von Bayer; (3) Aromatengemisch, erhältlich von Exxon (4) erhältlich von Hobum; Jodzahl max. 7; Epoxidsauerstoffgehalt 6-7% (5) erhältlich von Hobum; Jodzahl max. 7; Epoxidsauerstoffgehalt 4-5% (6) erhältlich von Agravis; Jodzahl 120; frei von Epoxidsauerstoff (7) erhältlich von Arizona Chemicals; Jodzahl 80; frei von Epoxidsauerstoff | | | | | | | | | | |

**Tab. 2 Harzaufbau nach 20 Schuss**

| | nicht | | | | | | | | | |
|---|---|---|---|---|---|---|---|---|---|---|
| | erfindungsgemäß | | | Erfindungsgemäß | | | | | | |
| Versuch | A | B | C | D | E | F | G | H | I | J |
| Rückstand [mg] | 120 | 31 | 65 | 0 | 20 | 18 | 34 | 34 | 40 | 23 |

Man erkennt aus Tab. 2, dass in den erfindungsgemäßen Versuchen der Harzaufbau bei der Kernherstellung deutlich verringert ist im Vergleich zu Versuch A, bei dem die Isocyanatkomponente aromatisches Lösungsmittel und keinen Monoester einer epoxidierten Fettsäure enthält. Durch die Menge des erfindungsgemäßen Monoesters lässt sich der Effekt je nach Bedarf steuern (vgl. Versuch I, G und E). Bei gleicher Menge führen epoxidierte Fettsäuremonoester zu einem deutlich besseren Ergebnis als der nicht epoxidierte Rapsölmethylester bzw. Tallölbutylester (vgl. Versuche D und B bzw. D und C). Wird ein Teil des Rapsölmethylesters durch epoxidierten Fettsäuremonoester ersetzt, lässt sich das mit Rapsölmethylester erzielte Ergebnis verbessern (vgl. Versuch B und J). Die Versuche belegen außerdem, dass sowohl die Verwendung eines Monoesters einer definierten epoxidierten Fettsäure (Versuch F) als auch die Verwendung des Monoesters eines Gemisches von epoxidierten Fettsäuren (Versuch E) eine deutliche Verbesserung im Vergleich zu Versuch A bringt.

Die Festigkeit der in den erfindungsgemäßen Beispielen hergestellten Kerne ist mit der Festigkeit der Kerne von Vergleichsbeispielen A bis C vergleichbar.

## Patentansprüche

1. Bindemittelsystem umfassend:
(A) eine Polyolkomponente, umfassend ein freie OH-Gruppen enthaltendes Phenolharz, wobei das Phenolharz teilweise mit einem C₁₋₈ Alkanol verethert ist,
(B) eine Isocyanatkomponente, umfassend ein Polyisocyanat mit mindestens zwei NCO-Gruppen pro Molekül,
(C) mindestens einen Monoester einer epoxidierten Fettsäure und gegebenenfalls
(D) ein oder mehr weitere Bestandteile ausgewählt aus organischen Lösungsmitteln, Silanen, Ölen, Komplexbildnern, Weichmachern, Additiven zur Verlängerung der Sandlebenszeit und internen Trennmitteln.

2. Bindemittelsystem gemäß Anspruch 1, wobei es sich um ein 2-Komponentensystem handelt, bei dem (A) die erste Komponente und (B) die zweite Komponente bildet, die optionalen Bestandteile (D), sofern vorhanden, in der ersten und/oder zweiten Komponente enthalten sind, und der Bestandteil (C) in der ersten oder zweiten Komponente oder in beiden vorhanden ist, vorzugsweise Bestandteil der Isocyanatkomponente ist.

3. Bindemittelsystem gemäß Anspruch 2, wobei die zweite Komponente (B) + (C) + aromatisches Lösungsmittel enthält.

4. Bindemittelsystem gemäß einem der Ansprüche 1 bis 3, wobei die Menge an (C) 0,5 bis 30 Gew.% bezogen auf das gesamte Bindemittelsystem beträgt.

5. Bindemittelsystem gemäß einem der Ansprüche 1 bis 4, wobei es sich bei (C) um ein Gemisch von Estern handelt, das sich von einem Öl ausgewählt aus Rapsöl, Sojaöl, Sonnenblumenöl, Leinöl, Ölbaumöl, Ölpalmöl, Hanföl und Tallöl ableitet, welches einer Umesterung mit einem einwertigen Alkohol und anschließenden Epoxidierung unterzogen wurde.

6. Bindemittelsystem gemäß Anspruch 5, wobei das als (C) eingesetzte epoxidierte Estergemisch eine Jodzahl von ≤ 7 aufweist.

7. Bindemittelsystem gemäß einem der Ansprüche 1 bis 4, wobei es sich bei (C) um einen Monoester der Formel 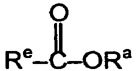 handelt,
bei dem sich R^{e} von einem C₈₋₂₄ Alkenyl mit mindestens einer C-C Doppelbindung ableitet, in dem mindestens eine C-C Doppelbindung epoxidiert ist; und R^{a} C₁₋₁₂ Alkyl, C₂₋₁₂ Alkenyl, C₆₋₁₀ Aryl oder C₇₋₁₅ Aralkyl ist, wobei die Doppelbindung eines C₂₋₁₂ Alkenyls auch epoxidiert sein kann.

8. Bindemittelsystem gemäß einem der Ansprüche 5 bis 7, wobei der für die Umesterung bzw. Veresterung verwendete Alkohol ausgewählt ist aus Methanol, Ethanol, n-Butanol, Isopropanol und 2-Ethylhexanol.

9. Formstoffmischung, umfassend ein Bindemittelsystem wie in einem der Ansprüche 1 bis 8 definiert und mindestens einen feuerfesten Formgrundstoff.

10. Formstoffmischung gemäß Anspruch 9, wobei die Menge des Bindemittelsystems 0,2 bis 5 Gew.%, bezogen auf das Gewicht des feuerfesten Formgrundstoffs, beträgt.

11. Formstoffmischung nach Anspruch 9 oder 10, wobei der feuerfeste Formgrundstoff Quarzsand umfasst.

12. Formstoffmischung gemäß einem der Ansprüche 9 bis 11, außerdem enthaltend einen Amin-Katalysator.

13. Verfahren zur Herstellung einer Formstoffmischung wie in einem der Ansprüche 9 bis 12 definiert, umfassend das Zugeben der wie in einem der Ansprüche 1 bis 9 definierten Bestandteile des Bindemittelsystems und gegebenenfalls eines Amin-Katalysators zum feuerfesten Formgrundstoff.

14. Verfahren zur Herstellung einer Formstoffmischung gemäß Anspruch 13, wobei es sich bei dem Bindemittelsystem um ein 2-Komponentensystem gemäß Anspruch 2 handelt und die beiden Komponenten gleichzeitig oder in beliebiger Reihenfolge zu dem feuerfesten Formgrundstoff zugegeben werden und wobei der Amin-Katalysator, falls er zugegeben wird, als Bestandteil der ersten Komponente zugegeben wird.

15. Verfahren zur Herstellung eines Gießformteils oder Gießkerns, umfassend
(a) Einbringen einer Formstoffmischung gemäß einem der Ansprüche 9 bis 12 in ein Formwerkzeug,
(b) Härten der Formstoffmischung im Formwerkzeug und
(c) anschließendes Trennen der gehärteten Formstoffmischung vom Formwerkzeug, um ein Gießformteil oder einen Gießkern zu erhalten.

16. Verfahren gemäß Anspruch 15, wobei die in das Formwerkzeug eingebrachte Formstoffmischung keinen Amin-Katalysator enthält und das Härten in Schritt (b) durch Leiten eines gasförmigen Katalysators durch die geformte Formstoffmischung erreicht wird.

17. Gießformteil oder Gießkern erhältlich nach dem Verfahren von Anspruch 15 oder 16.

18. Verwendung des Gießformteils oder des Gießkerns gemäß Anspruch 17 für den Metallguss.

## Claims

1. Binder system comprising:
(A) a polyol component, comprising a phenolic resin containing free OH groups, wherein the phenolic resin is partially etherified with a C₁₋₈-alkanol,
(B) an isocyanate component, comprising a polyisocyanate having at least two NCO-groups per molecule,
(C) at least one monoester of an epoxidized fatty acid and optionally
(D) one or more further constituents selected from organic solvents, silanes, oils, complexing agents, plastizicers, additives for prolonging the sand life, and internal release agents.

2. Binder system according to claim 1, wherein the binder system is a 2-component-system, in which (A) forms the first component and (B) forms the second component, the optional constituents (D), if present, are contained in the first and/or the second component, and the constituent (C) is present in the first or the second component or in both, preferably is a constituent of the isocyanate component.

3. Binder system according to claim 2, wherein the second component contains (B) + (C) + an aromatic solvent.

4. Binder system according to any one of claims 1 to 3, wherein the amount of (C) is 0.5 to 30 wt.-%, based on the total binder system.

5. Binder system according to any one of claims 1 to 4, wherein (C) is a mixture of esters, which is derived from an oil selected from rapeseed oil, soy oil, sunflower oil, linseed oil, olive tree oil, oil palm oil, hempseed oil and tall oil, which has been subjected to a transesterification with a monovalent alcohol and subsequent epoxidation.

6. Binder system according to claim 5, wherein the epoxidized ester mixture used as (C) has a iodine number of ≤ 7.

7. Binder system according to any one of claims 1 to 4, wherein (C) is a monoester of the formula 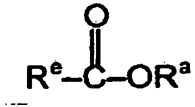 in which R^{e} is derived from a C₈₋₂₄-alkenyl having at least one C-C double bond, in which at least one C-C double bond is epoxidized; and R^{a} is C₁₋₁₂-alkyl, C₂₋₁₂-alkenyl, C₆₋₁₀-aryl or C₇₋₁₅-aralkyl, wherein the double bond of a C₂₋₁₂-alkenyl may also be epoxidized.

8. Binder system according to any one of claims 5 to 7, wherein the alcohol used for the transesterification or esterification, respectively, is selected from methanol, ethanol, n-butanol, isopropanol and 2-ethylhexanol.

9. Moulding material mixture, comprising a binder system as defined in any one of claims 1 to 8 and at least one refractory moulding base material.

10. Moulding material mixture according to claim 9, wherein the amount of the binder system is 0.2 to 5 wt.-%, based on the weight of the refractory moulding base material.

11. Moulding material mixture according to claim 9 or 10, wherein the refractory moulding base material comprises quartz sand.

12. Moulding material mixture according to any one of claims 9 to 11, further containing an amine catalyst.

13. Process for preparing a moulding material mixture as defined in any one of claims 9 to 12, comprising the addition of the constituents of the binder system as defined in any one of claims 1 to 9 and optionally an amine catalyst to the refractory moulding base material.

14. Process for preparing a moulding material mixture according to claim 13, wherein the binder system is a 2-component-system according to claim 2 and the two components are added simultaneously or in arbitrary order to the refractory moulding base material and wherein the amine catalyst, if added, is added as a constituent of the first component.

15. Process for preparing a casting mould or casting core comprising
(a) introducing a moulding material mixture according to any one of claims 9 to 12 into a mould,
(b) curing the moulding material mixture in the mould, and
(c) subsequently separating the cured moulding material mixture from the mould, in order to obtain a casting mould or a casting core.

16. Process according to claim 15, wherein the moulding material mixture introduced into the mould does not contain an amine catalyst and the curing in step (b) is achieved by passing a gaseous catalyst through the moulded moulding material mixture.

17. Casting mould or casting core obtainable by the process according to claim 15 or 16.

18. Use of the casting mould or the casting core according to claim 17 for metal casting.

## Revendications

1. Système de liant, comprenant:
(A) un composant polyol, comprenant une résine phénolique contenant des groupes OH libres, dans lequel la résine phénolique est partiellement éthérifiée avec un alcanol en C₁₋₈,
(B) un composant isocyanate, comprenant un polyisocyanate ayant au moins deux groupes NCO par molécule,
(C) au moins un monoester d'un acide gras époxydé et le cas échéant
(D) un ou plusieurs autres ingrédients choisis parmi les solvants organiques, les silanes, les huiles, les complexants, les plastifiants, les additifs pour l'allongement de la durée de vie du sable et les agents anti-agglomérants internes.

2. Système de liant selon la revendication 1, dans lequel il s'agit d'un système bicomposant, dans lequel (A) forme le premier composant et (B) forme le deuxième composant, les ingrédients optionnels (D), le cas échéant, sont présents dans le premier et/ou le deuxième composants, et l'ingrédient (C) est présent dans le premier ou le deuxième composant ou dans les deux, de préférence, il fait partie du composant isocyanate.

3. Système de liant selon la revendication 2, dans lequel le deuxième composant contient (B) + (C) + un solvant aromatique.

4. Système de liant selon l'une des revendications 1 à 3, dans lequel la quantité de (C) est de 0,5 à 30 % en poids par rapport au système de liant total.

5. Système de liant selon l'une des revendications 1 à 4, dans lequel (C) est un mélange d'esters, qui est dérivé d'une huile choisie parmi l'huile de colza, l'huile de soja, l'huile de tournesol, l'huile de lin, l'huile d'olivier, l'huile de palmier à huile, l'huile de chanvre et l'huile de tall, qui a été soumise à une estérification avec un alcool monovalent et à une époxydation consécutive.

6. Système de liant selon la revendication 5, dans lequel le mélange d'esters époxydé mis en oeuvre en tant que (C) présente un indice d'iode ≤ 7.

7. Système de liant selon l'une des revendications 1 à 4, dans lequel (C) est un monoester de formule 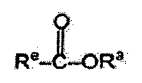 dans lequel R^{e} est dérivé d'un alcényle en C₈₋₂₄ ayant au moins une double liaison C-C, dans lequel au moins une double liaison C-C est époxydée ; et R^{a} est un alkyle en C₁₋₁₂, un alcényle en C₂₋₁₂, un aryle en C₆₋₁₀ ou un aralkyle en C₇₋₁₅, dans lequel la double liaison d'un alcényle en C₂₋₁₂ peut être aussi époxydée.

8. Système de liant selon l'une quelconque des revendications 5 à 7, dans lequel l'alcool utilisé pour l'estérification ou la transestérification est choisi parmi le méthanol, l'éthanol, le n-butanol, l'isopropanol et le 2-éthylhexanol.

9. Mélange de matières de moulage, comprenant un système de liant tel que défini dans l'une des revendications 1 à 8, et au moins une matière de base de moulage ignifugeante.

10. Mélange de matières de moulage selon la revendication 9, dans lequel la quantité du système de liant est de 0,2 à 5 % en poids, par rapport au poids de la matière de base de moulage ignifugeante.

11. Mélange de matières de moulage selon la revendication 9 ou 10, dans lequel la matière de base de moulage ignifugeante comprend du sable quartzique.

12. Mélange de matières de moulage selon l'une des revendications 9 à 11, contenant en outre un catalyseur aminé.

13. Procédé de fabrication d'un mélange de matières de moulage tel que défini dans l'une des revendications 9 à 12, comprenant l'addition des ingrédients du système de liant définis dans l'une des revendications 1 à 9 et, le cas échéant, d'un catalyseur aminé à la matière de base de moulage ignifugeante.

14. Procédé de fabrication d'un mélange de matières de moulage selon la revendication 13, dans lequel le système de liant est un système bicomposant selon la revendication 2 et les deux composants sont ajoutés simultanément ou dans un ordre quelconque à la matière de base de moulage ignifugeante et dans lequel le catalyseur aminé, au cas où il est ajouté, est ajouté en tant qu'ingrédient du premier composant.

15. Procédé de fabrication d'une pièce de moule de coulée ou d'un noyau de coulé, comprenant
(a) l'introduction d'un mélange de matières de moulage selon l'une des revendications 9 à 12 dans un outil de moulage,
(b) le durcissement du mélange de matières de moulage dans l'outil de moulage et
(c) la séparation consécutive du mélange de matières de moulage durcie de l'outil de moulage pour obtenir une pièce de moule de coulée ou un noyau de coulé.

16. Procédé selon la revendication 15, dans lequel le mélange de matières de moulage introduit dans l'outil de moulage ne contient pas de catalyseur aminé et le durcissement à l'étape (b) est obtenu par le passage d'un catalyseur gazeux à travers le mélange de matières de moulage moulé.

17. Pièce de moule de couleé ou noyau de coulé pouvant être obtenu selon le procédé de la revendication 15 ou 16.

18. Utilisation de la pièce de moule de coulée ou du noyau de coulé selon la revendication 17 pour la fonderie.
